# EUROPÄISCHE PATENTSCHRIFT

(11) **EP 0 642 426 B1**
(45) Veröffentlichungstag und Bekanntmachung des Hinweises auf die Patenterteilung: **04.06.1997**
(21) Anmeldenummer: 94906914.0
(22) Anmeldetag: 07.02.1994
(51) Int. Cl.: B60C 23/00, B60C 23/04

(54) **VENTIL MIT EINER EINRICHTUNG ZUR ERZEUGUNG EINES DRAHTLOS ÜBERMITTELBAREN DRUCKABNAHME-ANZEIGESIGNALS FÜR FAHRZEUGREIFEN**
VALVE WITH A SYSTEM FOR CREATING A NON-WIRED PRESSURE LOSS SIGNAL FOR MOTOR VEHICLE TYRES
VALVE AVEC UN DISPOSITIF POUR LA PRODUCTION D'UN SIGNAL DE DIMINUTION DE PRESSION TRANSMISSIBLE SANS FIL POUR DES PNEUMATIQUES DE VEHICULES

(30) Priorität: 08.02.1993 DE 4303583
(43) Veröffentlichungstag der Anmeldung: 15.03.1995
(73) Patentinhaber: ALPHA-BETA ELECTRONICS AG, CH-6300 Zug (CH)
(72) Erfinder: ACHTERHOLT, Rainer, D-87471 Durach (DE)
(74) Vertreter: Brehm, Hans-Peter, Dr., Dipl.-Chem.
(86) Internationale Anmeldenummer: EP9400341
(87) Internationale Veröffentlichungsnummer: WO9418018

(56) Entgegenhaltungen:
- EP-A- 0 284 895
- EP-A- 0 565 099
- WO-A-92/14620
- WO-A-92/20539
- WO-A-93/08035
- CH-A- 677 759
- DE-A- 3 445 854
- DE-A- 3 930 479
- FR-A- 2 680 137

## Beschreibung

Die Erfindung betrifft ein Ventil mit einer Einrichtung zur Erzeugung eines drahtlos übermittelbaren Druckabnahme-Anzeigesignals für Fahrzeugreifen. Als solche Fahrzeugreifen kommen insbesondere die Druckluftreifen von PKW, LKW, Omnibussen und Luftfahrzeugen in Betracht.

Mehr im einzelnen betrifft die Erfindung ein Ventil mit einer Einrichtung zur Erzeugung eines drahtlos übermittelbaren Druckabnahme-Anzeigesignals (Signalerzeugungseinrichtung) für Fahrzeugreifen, mit einem Ventilfuß, von dem ein Ventilschaft absteht, wobei die Signalerzeugungseinrichtung an der zum Ventilschaft abgewandten Seite des Ventilfußes angebracht ist und eine Druckerfassungseinrichtung, einen Sender und eine Stromquelle aufweist. Ein Ventil dieser Art ist aus der Deutschen Patentschrift Nr. 39 30 479 bekannt. Die dort beschriebene Druckerfassungseinrichtung weist eine Referenzdruck-Kammer auf, die bei geöffnetem Reifenventil mit einem Reifensolldruck beaufschlagbar ist und die bei geschlossenem Reifenventil druckdicht verschlossen ist. Diese Referenzdruck-Kammer ist teilweise von einer auslenkbaren Membran begrenzt, die ein bewegliches Schaltglied eines pneumatisch-mechanischem Druckschalters trägt. Wird der Schaltkontakt dieses Druckschalters geschlossen, so wird der Sender aktiviert und sendet ein Druckabnahme-Anzeigesignal aus.

Typischerweise ist die Empfindlichkeit eines solchen pneumatisch-mechanischen Druckschalters nicht besonders groß, weil die Auslenkung einer Membran deutliche Druckunterschiede voraussetzt; in der Regel kann eine Empfindlichkeit kleiner 0,3 oder 0,4 bar nicht erzielt werden. Sofern eine Membran aus dünnem Kunststoff- oder Gummimaterial vorliegt, besteht weiterhin die Gefahr einer allmählichen Gasdiffusion durch diese Membran hindurch, so daß sich der in der Referenzdruck-Kammer eingestellte Solldruck verändern kann. Weiterhin besteht die Gefahr, daß die Membran auch durch die erheblichen Beschleunigungskräfte am sich drehenden Rad verstellt wird.

Ein weiteres Ventil dieser Art ist aus WO-A-92/14620 bekannt.

In jüngerer Zeit sind miniaturisierte Absolutdruck-Sensoren entwickelt worden, die als Halbleiter-Bauelement ausgebildet sind und die einen piezo-resistiven Wandler oder ein Wandlersystem mit einer kapazitiven Brückenschaltung aufweisen. Derartige Absolutdruck-Sensoren erzeugen ein dem erfaßten Druck entsprechendes elektrisches Ausgangssignal, das nach Verstärkung und Verarbeitung zur Modulation einer Trägerfrequenz verwendet werden kann. Solche Absolutdruck-Sensoren können kontinuierlich oder periodisch in Betrieb gehalten oder lediglich bei Vorliegen eines Abfragesignal in Betrieb gesetzt werden. Häufig bereitet die Reproduzierbarkeit der Absolut-Reifendruckmessung mit Hilfe solcher Absolutdruck-Sensoren unter den rauhen Einsatzbedingungen eines Fahrzeugrades Schwierigkeiten, weil eine stabile Spannungsversorgung, sorgfältige Kalibrierung der off-set-Spannung und eine relative Konstanz der Betriebsbedingungen erforderlich sind. Weiterhin erfordert die telemetrische Übermittlung des erfaßten, absoluten Druckwertes einigen elektronischen Aufwand.

Demgegenüber besteht die Aufgabe der vorliegenden Erfindung darin, ein Ventil der genannten Art bereitszustellen, dessen Signalerzeugungseinrichtung den Reifendruck mit Hilfe eines miniaturisierten Absolutdruck-Sensors erfaßt, der ein elektrisches Drucksignal erzeugt, wobei jedoch die bekannten Schwierigkeiten hinsichtlich der Reproduzierbarkeit und des elektronischen Aufwandes erheblich vermindert sind. Insbesondere soll ein Ventil mit einer Signalerzeugungseinrichtung bereitgestellt werden, die einfach und robust aufgebaut ist, den Reifendruck mit einer Genauigkeit von wenigstens 0,1 bar erfaßt und die auch bei mehrjährigem Einsatz nur einen minimalen Stromverbrauch hat, der ohne weiteres von einer herkömmlichen Knopfzelle geliefert werden kann.

Die erfindungsgemäße Lösung dieser Aufgabe ist im Anspruch 1 angegeben.

Erfindungsgemäß erfolgt die Erfassung des Reifendruckes mit Hilfe eines miniaturisierten Absolutdruck-Sensors. Hierbei handelt es sich um ein modifiziertes Halbleiter-Bauelement, vorzugsweise auf Si-Basis, an dem mikromechanisch zusätzlich die erforderliche Wandlerstruktur erzeugt worden ist. Ein beispielhafter Festkörper-Absolutdruck-Sensor, der nach Art eines Chips aufgebaut ist, enthält einen hermetisch dicht verschlossenen Vakuum-Referenzraum, der teilweise von einer biegsamen Membran oder Brücke begrenzt ist, die ein Wandlersystem aufweist. Das Wandlersystem kann ein piezoresistiver Wandler sein, dessen Widerstandselemente nach Art einer Wheatstone-Brücke geschaltet sind. Alternativ kann das Wandlersystem Bestandteil einer kapazitiven Brückenschaltung sein, die beispielsweise mit vier Kondensatoren versehen ist. Die mikromechanisch erzeugte Wandlerstruktur kann monolithisch mit weiteren Schaltungsfunktionen verknüpft sein, beispielsweise zur Stabilisierung der Eingangsspannung und Erzeugung einer Bezugsspannung, zur Kompensation von Temperatureffekten, zur Einstellung des Nullpunktes, der Empfindlichkeit und des Meßbereiches. Der Absolutdruck-Sensor kann gemeinsam mit weiteren Bauelementen (Mikroprozessor, Temperatorsensor, Beschleunigungssensor, Schaltungskomponenten) auf einem Chip realisiert sein, der seinerseits auf einem Glas- oder Keramiksubstrat befestigt sein kann. Derartige Festkörper-Absolutdruck-Sensoren mit piezo-resistiven Wandlersystem sind beispielsweise für Druckmessungen im Bereich von 0 bis 3,5 bar oder von 0 bis 7,0 bar oder von 0 bis 14 bar Überdruck verfügbar und sind in einem Temperaturbereich von -40°C bis +125°C einsetzbar. In dem hier vor allem interessierenden Druckbereich von etwa 1 bis 7 bar Überdruck wird wenigstens eine Meßgenauigkeit von 0,1 bar erzielt. Als Ausgangssignal fällt typischerweise eine Spannung an, deren Wert einige Volt beträgt. Die zum Betrieb erforderliche Stromaufnahme kann beispielsweise ungefähr 1 mA betragen. Mit Wandlersystemen mit kapazitiver Brückenschaltung kann eine besonders hohe Empfindlichkeit (in der Größenordnung von 10 mbar), hohe Linearität und geringe Temperaturempfindlichkeit erzielt werden.

Ein wesentlicher Gesichtspunkt der vorliegenden Erfindung besteht darin, einem solchen Absolutdruck-Sensor einen elektronischen Speicher zuzuordnen, in welchem ein ausgewähltes, vom Absolutdruck-Sensor erzeugtes, elektrisches Drucksignal dauerhaft gespeichert werden kann. Typischerweise erzeugt der Sensor als Ausgangssignal eine Spannung. Dieses Analogsignal wird vorzugsweise einem A/D-Wandler zugeführt, um ein digitalisiertes Drucksignal zu erhalten. Das digitalisierte Drucksignal, das den erfaßten Druckwert beispielsweise in Form eines 8-Bit-Wortes oder in Form eines 16-Bit-Wortes wiedergibt, wird in dem elektronischen Speicher dauerhaft gespeichert. Ersichtlich wird für den elektronischen Speicher lediglich eine vergleichsweise geringe Kapazität gefordert, weil lediglich ein oder mehrere Bit-Worte zu speichern ist/sind. Wichtig ist, daß der elektronische Speicher die zugeführten Bit-Worte bei minimalem Stromverbrauch dauerhaft und zuverlässig speichern kann. Beispielsweise kommt als elektronischer Speicher mit minimalem Strombedarf ein RAM mit einem kontinuierlichen Strombedarf kleiner 1 µA oder ein EEPROM in Betracht.

Ein RAM (random excess memory bzw. ein Schreib-Lese- Speicher) speichert die digitalen Daten so lange, solange die Betriebsspannung anliegt und keine neuen Informationen zugeführt werden. Handelsüblich sind beispielsweise RAM zugänglich, die bei einer Spannung von etwa 1,5 V lediglich einen kontinuierlichen Strombedarf von Bruchteilen eines Mikromapere haben. Wird ein solcher RAM beispielsweise durch eine Batterie mit einer Kapazität von etwa 10 mA/h gepuffert, so kann eine Betriebsdauer von mehreren Jahren erhalten werden.

Ein EEPROM (electrically erasable programmable read only memory, bzw. ein elektrisch programmierbarer und veränderbarer Nur-Lese-Speicher) speichert die aufgenommenen Daten auch nach Abschalten der Betriebsspannung. Typischerweise wird an den Eingang "Programmieren" die erforderliche Spannung angelegt, und daraufhin werden die an den verschiedenen Dateneingängen anliegenden Informationen (Zustände) an der Stelle in den Speicher übernommen und dauerhaft festgehalten, auf welche die Adresse zeigt. Ausgelesen wird durch Anlegen der Adresse und Aktivieren der Leseleitung. Neue Informationen können durch elektrisches Über- oder Neuschreiben eingeführt und abgespeichert werden. Neben dieser typischen Betriebsweise eines EEPROM existieren abgewandelte Systeme zum Einschreiben oder Auslesen der Information. Die Besonderheit besteht darin, daß in solchen Speichern die Information auch nach Abschalten der Betriebsspannung erhalten bleibt. EEPROMs und abgewandelte Systeme dieser Art sind handelsüblich zugänglich.

Mit der erfindungsgemäß vorgesehenen Kombination eines Absolutdruck-Sensors und eines elektronischen Speichers für ein elektrisches Drucksignal wird ein elektronisches Äquivalent zur Referenzdruck-Kammer bei herkömmlichen Reifendruck-Erfassungs- und -Anzeige-Systemen geschaffen. Dieses "elektronische Äquivalent" liefert eine Reihe von Vorteilen.

So wird eine höhere Genauigkeit bei der Erfassung, Speicherung und Wiedergabe eines Reifensolldruckes erzielt; die Genauigkeit des Reifensolldruck-Wertes beträgt wenigstens 0,1 bar. Das "elektronische Äquivalent" weist keine verstellbaren Komponenten auf, die durch die Beschleunigungskräfte am drehenden Rad beeinflußt werden können.

Der in digitalisierter Form als Bit-Wort gespeicherte Reifensolldruck-Wert kann praktisch beliebig lange gespeichert werden, ohne daß eine Änderung oder Verfälschung eintritt. Der gespeicherte Druckwert steht einfach und schnell für eine Weiterverarbeitung in einem Mikroprozessor zur Verfügung, insbesondere für einen Vergleich mit einem neuen Druckwert, welcher dem aktuellen Reifendruck entspricht. Bei einem solchen Vergleich wird ein Vergleichssignal erzeugt, das in Bezug zu einem vorgegebenen Schwellenwert gesetzt wird. Eine Aktivierung des Senders und Aussendung eines Druckabnahme-Anzeigesignales erfolgt dann, wenn ein vorgegebener Abstand zwischen Schwellenwert und Vergleichssignal über- oder unterschritten ist. Mit Hilfe des Abstandes und/oder des Schwellenwertes kann die Empfindlichkeit und damit die Auslösung und/oder die Art eines Alarmsignals eingestellt werden.

Entgegen dem typischen Einsatzzweck eines Absolutdruck-Sensors ist erfindungsgemäß nicht erforderlich, den erfaßten Druckwert als absolute Druckwertgröße wiederzugegeben und anzuzeigen. Vielmehr wird nach einer bevorzugten Ausführungsform der vorzugsweise digitalisierte Druckwert lediglich als eine Bezugsgröße gespeichert, um für Vergleichszwecke zur Verfügung zu stehen. Die absolute Größe dieses gespeicherten Wertes ist ohne größere Bedeutung, solange gewährleistet ist, daß der zum Vergleich heranzuziehende Druckwert unter den gleichen Rahmenbedingungen erzeugt wird und zur Verfügung steht. Im Rahmen der Erfindung sind daher die vergleichweise aufwendigen Eichungs- und Kallibrierungsmaßnahmen nicht erforderlich, die für die richtige und reproduzierbare Wiedergabe von absoluten Druckwerten erforderlich sind. Für die Zwecke der Erfindung ist es ausreichende, wenn das zu einem späteren Zeitpunkt gebildete und dann dem aktuellen Reifendruck entsprechende neue Drucksignal unter den gleichen spezifischen Rahmenbedingungen gebildet wird, wie das vorher erzeugte, ausgewählte Drucksignal, weil dann die meßspezifischen Abweichungen kompensiert werden und das Ergebnis eines Vergleiches dieser beiden Drucksignale nicht beeinflussen.

Weiterhin kann dieses erfindungsgemäß vorgesehene "elektronische Äquivalent" zu einer herkömmlichen Referenzdruck-Kammer mit kleinen, einfach aufgebauten Halbleiter-Bauelementen realisiert werden, die handelsüblich zu geringen Kosten zur Verfügung stehen. Typischerweise sind der Absolutdruck-Sensor, der A/D-Wandler und der elektronische Speicher zusammen mit einem Mikroprozessor auf einem Chip integriert, der an einer Platine angebracht ist. Aufbauend auf diesem "elektronischen Äquivalent" zu einer herkömmlichen Referenzdruck-Kammer lassen sich wesentlich einfachere, robustere, kompaktere und zuverlässigere Einrichtungen zur Reifendruck-Kontrolle von Fahrzeugreifen realisieren, als dies mit einer herkömmlichen Referenzdruck-Kammer möglich ist.

Vorteilhafte Ausgestaltungen und Weiterbildungen der Erfindung ergeben sich aus den Unteransprüchen.

Der Absolutdruck-Sensor erzeugt u.a. ein ausgewähltes elektrisches Drucksignal, das im elektronischen Speicher gespeichert wird und das im Wege der elektronischen Signalverarbeitung wie ein Referenzdruck zur Verfügung steht. Das ausgewählte Drucksignal muß dann erzeugt werden, wenn im Fahrzeugreifen der vorgesehene Reifensolldruck herrscht.

Ein typisches Ventil für Fahrzeugreifen weist eine Ventileinrichtung auf, mit einem verstellbaren Ventilglied, das unter der Vorspannung einer Feder gegen einen Ventilsitz gedrückt wird, um die Ventileinrichtung und damit den Fahrzeugreifen druckdicht zu verschließen. Weiterhin kann dieses Ventilglied mit Hilfe eines Ventilstößels gegen die Vorspannung der Feder vom Ventilsitz gelöst werden, um einen Füllvorgang oder eine sonstige Änderung der Reifendruckes durchzuführen. Typischerweise herrscht unmittelbar nach Beendigung eines Füllvorganges oder einer Reifendruckkontrolle im Fahrzeugreifen der vorgegebene Reifensolldruck, der mit dem am Manometer einer Servicestation ablesbaren Druck übereinstimmt.

Das erfindungsgemäße Ventil weist eine Aktivierungseinrichtung auf, die jedesmal nach Durchführung eines Füllvorganges oder einer Reifendruckkontrolle die Signalerzeugungseinrichtung aktiviert, um den dann gerade vorherrschenden Reifendruck zu erfassen und als ausgewählten elektrischen Druckwert im elektronischen Speicher abzuspeichern. Eine bevorzugte Ausgestaltung dieser Aktivierungseinrichtung ist in der Weise ausgebildet, daß mit dem Ventilstößel ein Permanentmagnet mechanisch gekoppelt ist, der beim Öffnen und Schließen der Ventileinrichtung entsprechend verstellt wird. Diesem Permanentmagneten ist ein Magnetfeldsensor zugeordnet. Als Magnetfeldsensor kommt beispielsweise ein Reed-Kontakt, ein Hall-Sensor oder ein magnetisch steuerbarer Transistor in Betracht. Vorzugsweise ist ein magnetisch steuerbarer Transistor vorgesehen, der klein, robust und mechanisch unempfindlich aufgebaut ist. Beim Niederdrücken des Ventilgliedes, um die Ventileinrichtung zu öffnen, wird der Abstand des Permanentmagneten zum Magnetfeldsensor verändert, was ein Aktivierungssignal auslöst. Mit Hilfe einer entsprechenden, ein Verzögerungsglied aufweisenden Schaltung kann erreicht werden, daß der Reifendruck erst dann erfaßt wird, nachdem die Ventileinrichtung geöffnet, erneut verschlossen worden ist und danach eine kurze, vorgegebene Zeitspanne verstrichen ist. So kann gewährleistet werden, daß tatsächlich der nach Druckausgleich im Reifen und im Ventil sich einstellende Reifensolldruck bestimmt wird, ohne Verfälschung durch irgendwelche Strömungsvorgänge und dergleichen im Ventil. Das so erzeugte, einem vorgegebenen Reifensolldruck entsprechende, elektrische Drucksignal dient als "ausgewähltes Drucksignal" und wird in dem elektronischen Speicher gespeichert.

Dieses ausgewählte Drucksignal dient in erster Linie als Referenzsignal bei einem Vergleich mit später erzeugten, neuen Drucksignalen, welche dem dann aktuellen Reifendruck entsprechen. Zusätzlich kann vorgesehen werden, daß im elektronischen Speicher und/oder im Mikroprozessor ein an das System angepaßter Druckwert enthalten ist, welcher dem typischen Reifendruck des vorgesehenen Fahrzeugreifens entspricht, bei PKW-Reifen beispielsweise in der Größenordnung von etwa 1,0 bis 2,5 bar Überdruck. Das ausgewählte Drucksignal wird daraufhin mit dem a priori vorgegebenen Druckwert verglichen, um grobe Fehler beim Befüllen des Reifens zu erfassen, beispielsweise wenn ein deutlich zu niedriger Kaltfülldruck eingestellt wird oder eine sonstige unterste Grenze unterschritten wird. Der Mikroprozessor veranlaßt den Sender, ein entsprechendes Signal auszusenden, und am Armaturenbrett des Fahrzeugs kann ein Hinweis auf den falschen Fülldruck angezeigt werden.

Typischerweise wird das vom Absolutdruck-Sensor erzeugte elektrische Drucksignal anfänglich in Form eines Analogsignales anfallen. Vorzugsweise ist vorgesehen, daß dieses Analogsignal digitalisiert wird, und das dabei erhaltene Digitalsignal, beispielsweise ein 8-Bit-Wort oder ein 16-Bit-Wort gespeichert bzw. zum Signalvergleich herangezogen wird. Die zur Digitalisierung erforderlichen Analog/Digital-Wandler stehen einfach und preiswert zur Verfügung und können als zusätzlicher elektronischer. Baustein auf dem Chip integriert sein.

In diesem Falle ist der elektronische Speicher vorzugsweise als Digitalspeicher ausgebildet. Digitalspeicher dieser Art sind vergleichsweise einfach aufgebaut und stehen handelsüblich zur Verfügung.

Nach einer weiteren vorteilhaften Ausgestaltung kann die Signalerzeugungseinrichtung zusätzlich einen als Halbleiterbauelement ausgebildeten Beschleunigungssensor aufweisen. Ein solcher Beschleunigungssensor ist grundsätzlich in ähnlicher Weise aufgebaut, wie der eingangs erläuterte Absolutdruck-Sensor, und weist eine Membran auf, die unter der Einwirkung von Beschleunigungswerten beansprucht wird. Die Membran bildet Bestandteile von oder ist verbunden mit Widerstandselementen oder Kondensatoren, deren elektrische Eigenschaften entsprechend den auftretenden Beschleunigungswerten verändert werden. Der Beschleunigungssensor erzeugt ein elektrisches Ausgangssignal, das ein Maß für die auftretenden Beschleunigungsweite ist. Am Fahrzeugrad eines PKW können durch Fahrbahnstöße Beschleunigungswerte in vertikaler Richtung bis zu etwa 25 g auftreten; bei einer Fahrzeuggeschwindigkeit von 250 km/h kann am Fahrzeugrad eine Zentrifugalbeschleunigung bis zu 830 g auftreten. Der Beschleunigungssensor muß solchen Beschleunigungswerten standhalten. Ferner sollen wenigstens Beschleunigungswerte zwischen 0 und etwa 10 g exakt erfaßbar sein, um mit Hilfe des Beschleunigungssensors zwischen Fahrzeug-Stillstand und Fahrzeug-Schrittgeschwindigkeit unterscheiden zu können. Der Beschleunigungssensor kann zusammen mit den anderen Komponenten (etwa Absolutdruck-Sensor, Speicher, A/D-Wandler, Mikroprozessor) auf einem gemeinsamen Chip ausgebildet sein.

Mit Hilfe des Beschleunigungssensors können Beschleunigungs-bedingte Fehlmessungen des Absolutdruck-Sensors korrigiert und kompensiert werden. Noch wichtiger ist es jedoch, mit Hilfe des Beschleunigungssensors zu erfassen, ob das Fahrzeug steht oder wenigstens in Schrittgeschwindigkeit bewegt wird. Bei Schrittgeschwindigkeit treten am Rad wenigstens Beschleunigungswerte von etwa 3 g auf. Auf diesem Wege ist es möglich, die periodische Abfrage des Reifendruckes nur dann zu aktivieren, wenn das Fahrzeug wenigstens mit Schrittgeschwindigkeit bewegt wird. Damit kann während des Stillstandes des Fahrzeuges der Energieverbrauch des Systems reduziert werden. Vorzugsweise wird die periodische Druckabfrage mit Hilfe des Beschleunigungssensors nur dann aktiviert, wenn das Fahrzeug wenigstens mit Schrittgeschwindigkeit (5 km/h) bewegt wird. Weiterhin kann mit Hilfe des Beschleunigungssensors zwischen langsamer Fahrt (beispielsweise Stadtverkehr, stop-and-go-Verkehr) und schneller Fahrt (beispielsweise Autobahnfahrt) des Fahrzeugs unterschieden werden. Angepaßt kann eine Aktivierung des Absolutdruck-Sensors und/oder des Mikroprozessors in größeren oder kleineren zeitlichen Abständen vorgenommen werden.

Alternativ ist es möglich, anstelle eines Beschleunigungssensors einen zweiten Absolutdruck-Sensor vorzusehen, der die geringen, periodischen Druckstöße erfaßt, die typischwerweise an einem rotierenden Fahrzeugrad auftreten. Auch mit Hilfe eines solchen zweiten Absolutdruck-Sensors könnte zwischen Fahrzeug-Stillstand und fahrendem Fahrzeug unterschieden werden, um den Mikroprozessor und die von ihm gesteuerten Sensoren nur dann zu aktivieren, wenn das Fahrzeug fährt.

Nach einer weiteren vorteilhaften Ausgestaltung weist die Signalerzeugungseinrichtung wenigstens einen als Halbleiter-Bauelement ausgebildeten Temperatursensor auf. Vorzugsweise soll der Temperatursensor wenigstens einen Meßbereich von etwa -40°C bis +150°C aufweisen. Mit Hilfe des Temperatursensors wird die Temperatur des Druckmediums im Reifen erfaßt. Anhand der erfaßten Reifen- und/oder Druckluft-Temperatur können Temperatur-bedingte Abweichungen des erfaßten Reifendruckes von den Normbedingungen kompensiert werden. Ferner kann bei Überschreitung einer Schwellentemperatur ein Alarm ausgelöst werden, was insbesondere im LKW-Einsatz bedeutsam ist.

Weiterhin weist die Druckerfassungseinrichtung vorzugsweise einen Taktgenerator auf, mit dessen Hilfe ein Systemtakt zur periodischen Aktivierung des Meßsystems erzeugt wird. Der Taktgenerator verbraucht weniger als 30 Nanoampere Strom. Mit Hilfe des Taktgenerators ist es möglich, den Mikroprozessor und die von diesem angesteuerten Sensoren lediglich periodisch in Betrieb zu setzen. Im Ruhezustand kann der Mikroprozessor völlig abgeschaltet werden und verbraucht dann keine Energie.

Beispielsweise kann der Impuls des Taktgenerators den Mikroprozessor alle 4 sec an die Betriebsspannung schalten. Dadurch startet das System und die verschiedenen Sensoren erfassen die jeweiligen Zustände, wie etwa Reifendruck, Beschleunigung und Temperatur. Die gebildeten elektrischen Signale werden dem Mikroprozessor zugeführt und dort verarbeitet und mit den gespeicherten Welten verglichen. Sofern vorgegebene Abstände zu vorgegebenen Schwellenwerten über- oder unterschritten werden, wird ein Protokoll gesendet. Das Protokoll kann verschiedene Alarmsignale vorsehen, beispielsweise einen Hinweis auf einen zu niedrigen Kaltfülldruck des Reifens, eine "sofortige Warnung", wenn eine vorgegebene Leckrate überschritten wird oder eine "sanfte Warnung", wenn lediglich eine mäßige Leckrate in der Größenordnung von etwa 0,1 bar/Monat auftritt. Diese Alarmsignale können aus verschiedenen Signalfrequenzen bestehen, die vom Mikroprozessor erzeugt und von der Sendeantenne des Senders abgestrahlt werden. Gute Ergebnisse sind mit einer Abstrahlleistung der Sendeantenne von etwa 6 mW erzielt worden.

Für die routinemäßige Abfrage der Meßwerte und Signalverarbeitung mit dem Ergebnis, daß ein Protokoll nicht ausgesandt werden muß, benötigt das System nur einige Millisekunden. Sofern das System zusätzlich ein Protokoll aussendet, muß das System für wenige 10 Millisekunden aktiviert werden. Danach schaltet sich der Mikroprozessor selbsttätig wieder ab, und das System wartet auf die nächste Initialisierung.

Mit Hilfe des Beschleunigungssensors ist es möglich, diese im Regelfalle beispielsweise alle 4 sec erfolgende Initialisierung nur dann in Gang zu setzen, wenn das Fahrzeug wenigstens mit Schrittgeschwindigkeit bewegt wird. Befindet sich das Fahrzeug in Ruhe, so kann die periodische Abfrage der Sensoren völlig unterbleiben oder lediglich in wesentlich größeren Zeitabständen durchgeführt werden. Weiterhin kann mit Hilfe des Beschleunigungssensors bei langsamer Fahrt eine Initialisierung nur in größeren Abständen (beispielsweise alle 30 bis 60 sec) und bei schneller Fahrt in kürzeren Abständen (beispielsweise alle 2 bis 3 sec) eingeleitet werden.

Mit Hilfe dieser Anpassung der Meßprogramme an den Fahrzeugzustand und/oder der lediglich in bestimmten Abständen periodisch erfolgenden Abfrage der Sensoren und Auswertung der Meßwerte kann eine sehr stromsparende Arbeitsweise realisiert werden. Diese stromsparende Arbeitsweise des gesamten Systems erhöht die Lebensdauer der Stromquelle erheblich. Als Stromquelle kann beispielsweise eine Lithium-Batterie eingesetzt werden, die eine Kapazität von wenigstens 40 mAh aufweist und eine Spannung von 3 V liefert. Eine solche Batterie kann als Knopfzelle ausgebildet sein.

Weiterhin kann eine Spannungsüberwachung der Stromquelle vorgesehen werden. Beispielsweise kann zyklisch die Kapazität der Batterie geprüft und bei verminderten Werten ein Alarmsignal ausgesendet werden. Dadurch ist es möglich, lange bevor das System durch Kapazitätsmängel der Batterie ausfällt, ein entsprechendes Warnsignal zu erzeugen, um daraufhin Gegenmaßnahmen zu ergreifen.

Die vorstehend genannten Komponenten und Sensoren sind vorzugsweise in einem Baustein integriert, beispielsweise in ASIC-Technik ausgeführt. Das resultierende ASIC-Bauelement, die Batterie und die Sendeantenne werden in einem gekapselten Modul zusammengefaßt. Das Modul wird an der zum Ventilschaft abgewandten Seite des Ventilfußes befestigt. Dort stehen die Sensoren in Kontakt mit dem zu überwachenden Druckmedium im Reifen.

Anstelle einer Batterie könnten auch andere Stromquellen vorgesehen werden, beispielsweise ein piezo-elektrischer Wandler, der die Walkbewegung des Fahrzeugreifens zur Stromerzeugung ausnutzt oder eine induktive Energie-Einkopplung.

Die vorliegende Erfindung bezweckt eine Verbesserung und Weiterbildung des aus der Deutschen Patentschrift Nr. 39 30 479 bekannten Ventil mit einer Einrichtung zur Erzeugung eines drahtlos übermittelbaren Druckabnahme-Anzeigesignals. Hinsichtlich weiterer Einzelheiten wird auf die Offenbarung dieser Druckschrift verwiesen. Mit dieser ausdrücklichen Bezugnahme soll der Inhalt dieser Druckschrift - soweit zum Verständnis der vorliegenden Erfindung hilfreich und notwendig - auch zum Bestandteil der vorliegenden Unterlagen gemacht werden.

Nachstehend wird die Erfindung mehr im einzelnen anhand einer bevorzugten Ausführungsform mit Bezugnahme auf eine Zeichnung erläutert; diese zeigt eine schematische Schnittdarstellung eines erfindungsgemäßen Ventiles.

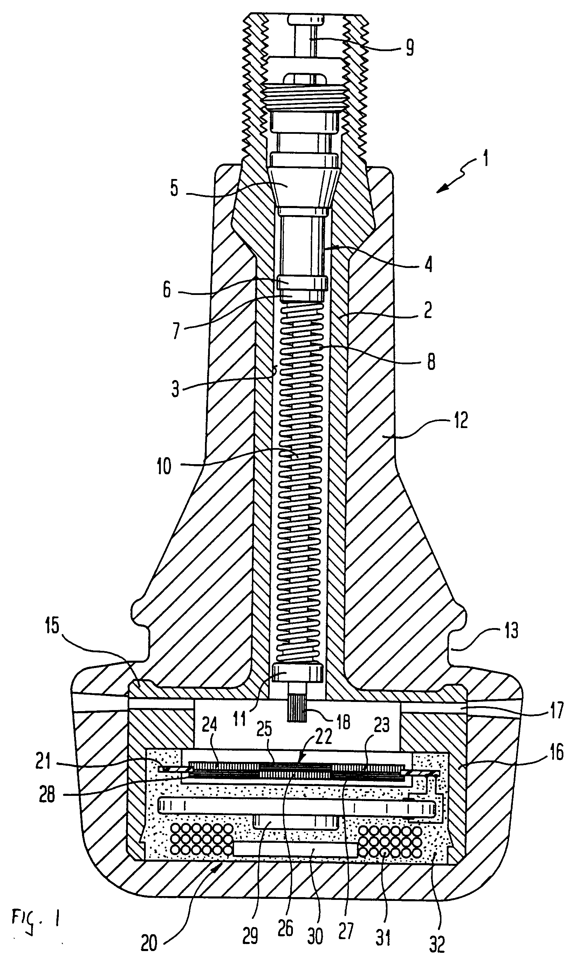

Das in der Zeichnung dargestellte Ventil 1 ist für die Felge eines PKW bestimmt und weist eine übliche Ventileinrichtung sowie eine erfindungsgemäß ausgebildete Signalerzeugungseinrichtung auf. Das Ventil 1 weist einen Ventilschaft 2 auf, der eine Ventilbohrung 3 begrenzt und der in einem Ventilfuß 15 endet. Innerhalb der Ventilbohrung 3 befindet sich ein üblicher Ventileinsatz 4 (vgl. DIN 7757), der zwei Dichtungen 5 und 6, ein Ventilglied 7, eine Feder 8 und einen Ventilstößel 9 aufweist. Mit der einen Dichtung 5 liegt der Ventileinsatz 4 druckdicht am Innenumfang der Ventilbohrung 3 an. Die andere Dichtung 6 bildet einen Ventilsitz für das Ventilglied 7, das unter der Vorspannung der Feder 8 gegen diesen Ventilsitz 6 gedrückt wird und damit das Ventil 1 und den damit ausgerüsteten Luftreifen druckdicht verschließt. Mit Hilfe des Stößels 9 kann das Ventilglied 7 - gegen die Vorspannung der Feder 8 - vom Ventilsitz 6 gelöst werden, so daß Druckmedium durch die Ventilbohrung 3 hindurchtreten kann, beispielsweise um einen Füllvorgang durchzuführen. Dieses, aus Metall, beispielsweise Aluminium oder Messing bestehende Ventil 1 ist in die Bohrung eines keulenförmigen Gummikörpers 12 eingesetzt, der am Außenumfang des verdickten Bereiches eine umlaufende Nut 13 aufweist. Unter elastischer Verformung des Gummikörpers 12 wird diese Nut 13 in die - nicht dargestellte - Ventilbohrung an der Felge eines Fahrzeugreifens eingesetzt. In diesem Falle ist das Ventil 1 für einen schlauchlosen Reifen bestimmt. Für Schlauchreifen kann eine abgewandelte, angepaßte Ventilausführung vorgesehen werden.

Dieser beschriebene, herkömmliche Ventilaufbau ist beim erfindungsgemäßen Ventil 1 im wesentlichen in zwei Punkten abgewandelt. Der mit dem Stößel 9 verbundene Stab 10, der das Ventilglied 7 verstellt und der ein Widerlager 11 für die Feder 8 trägt, ist über dieses Widerlager 11 hinaus verlängert und weist an seinem freien Ende einen Permanentmagneten 18 auf. Bei geschlossener Ventileinrichtung befindet sich dieser Permanentmagnet 18 in einem gewissen Abstand zu einem magnetisch steuerbaren Transistor 25 der Signalerzeugungseinrichtung 20. Wird der Ventilstößel 9 niedergedrückt, so wird auch der Stab 10 entsprechend verstellt und der Permanentmagnet 18 an diesen magnetisch steuerbaren Transistor 25 angenähert.

Des weiteren ist an der zum Ventilschaft 2 abgewandten Seite des Ventilfußes 15 einstückig eine zylinderförmig Hülse 16 angeformt, die mehrere radial ausgerichtete Bohrungen 17 aufweist, um eine Strömungsverbindung zwischen der Ventilbohrung 3 und dem Reifeninnenraum zu schaffen. Der Innenumfang der Hülse 16 ist abgestuft und in den so geschaffenen Hohlraum ist das Modul einer Signalerzeugungseinrichtung 20 eingesetzt.

Die Komponenten der Signalerzeugungseinrichtung 20 sind lediglich schematisch angedeutet. Zu diesen Komponenten gehören eine Platine 21 mit einem Chip 22, der als integrierte Bauelemente einen Absolutdruck-Sensor 23, einen Beschleunigungssensor 24, einen magnetisch steuerbaren Transistor 25 und einen Mikroprozessor 26 aufweist, der mit einem A/D-Wandler 27 und einem elektronischen Speicher 28 versehen ist. Benachbart zu der Platine 21 ist eine Batterie 29 angeordnet, beispielsweise eine Lithium-Batterie, die für eine Kapazität von etwa 40 mAh ausgelegt ist. Benachbart zu dieser Batterie 29 befindet sich ein Sender 30, mit einer Antenne 31. Die genannten Komponenten sind in Kunstharz eingegossen und bilden ein Modul 32, das an seinem Außenumfang einen Vorsprung aufweist, der - wie dargestellt - in eine umlaufende Nut am Innenumfang der Hülse 16 einrastbar ist. Alternativ sind auch andere Maßnahmen zur Befestigung des Moduls 32 an der Hülse 16 möglich, beispielsweise eine Befestigung mit Hilfe von - nicht dargestellten - Schraubbolzen oder anderen Befestigungsmitteln.

In einer praktischen Ausführungsform des erfindungsgemäßen Ventils weist dieses Modul am Ventilfuß eines PKW-Reifenventils einen Durchmesser von etwa 20 mm auf und eine axiale Länge von etwa 10 bis 12 mm auf. Das Gewicht beträgt nur etwa 10 g, so daß durch die zusätzliche Anbringung dieser Signalerzeugungseinrichtung am Ventil eine nennenswerte Umwucht nicht erzeugt wird.

## Patentansprüche

1. Ventil
mit einer Einrichtung zur Erzeugung eines drahtlos übermittelbaren Druckabnahme-Anzeigesignals (Signalerzeugungseinrichtung) für Fahrzeugreifen,
wobei das Ventil (1) einen Ventilfuß (15) und einen Ventilschaft (2) aufweist, der von dem Ventilfuß (15) absteht, so daß der Ventilfuß (15) eine zum Ventilschaft (2) entfernte Ventilfußseite hat;
wobei die Signalerzeugungseinrichtung an dieser zum Ventilschaft (2) entfernten Ventilfußseite angebracht ist und wenigstens aufweist:
- einen Absolutdruck-Sensor (23), der mit dem Reifendruck beaufschlagbar ist und der ein dem Reifendruck entsprechendes elektri sches Drucksignal erzeugt;
- einen elektronischen Speicher (27);
- einen Sender (30, 31) zur telemetrischen Übermittlung eines Druckabnahme-Anzeigesignals;
- einen Mikroprozessor (26) mit einer Arithmetikeinheit; und
- eine Stromquelle (29);
dadurch gekennzeichnet, daß
zusätzlich eine Aktivierungseinrichtung (14, 25) vorhanden ist;
durch eine Betätigung dieser Aktivieruungseinrichtung (14, 25) der Absolutdruck-Sensor (23) aktiviert und mit dessen Hilfe ein elektrisches Drucksignal gebildet wird, das dem gerade herrschenden Reifendruck (Reifensolldruck) entspricht;
dieses nach Betätigung der Aktivierungseinrichtung (14, 25) gebildete elektrische Drucksignal oder ein davon abgeleitetes Signal in den elektronischen Speicher (27) eingeschrieben, dort dauerhaft gespeichert und für Referenzzwecke als ausgewähltes Drucksignal bereitgehalten wird;
und die Arithmetikeinheit
- ein vom Absolutdruck-Sensor (23) neu erzeugtes elektrisches Drucksignal mit dem ausgewählten gespeicherten Drucksignal vergleicht und ein Vergleichssignal erzeugt;
- einen Bezug des Vergleichssignal zu einem vorgegebenen Schwellenwert herstellt; und
- jedenfalls dann den Sender (30, 31) aktiviert, wenn ein vorgegebener Abstand zwischen Schwellenwert und Vergleichssignal über- oder unterschritten ist.

2. Ventil nach Anspruch 1,
dadurch gekennzeichnet, daß
die Signalerzeugungseinrichtung zusätzlich einen Beschleunigungssensor (24) aufweist.

3. Ventil nach Anspruch 1 oder 2,
dadurch gekennzeichnet, daß
der Absolutdruck-Sensor (23) im Regelfalle deaktiviert ist und lediglich nach einer Aktivierung den Reifendruck erfaßt, ein entsprechendes Drucksignal erzeugt und daraufhin wieder in den deaktivierten Zustand übergeht.

4. Ventil nach Anspruch 3,
dadurch gekennzeichnet, daß
eine periodische Aktivierung des Absolutdruck-Sensors (23) zur Bildung neuer elektrischer Drucksignale nur dann erfolgt, wenn der Beschleunigungssensor (24) eine Umdrehung des Rades erfaßt hat, an dem sich das Ventil (1) befindet.

5. Ventil nach einem der Ansprüche 1 bis 4,
dadurch gekennzeichnet, daß
der Absolutdruck-Sensor (23) als Halbleiter-Bauelement ausgebildet ist und einen piezo-resistiven Wandler oder ein Wandlersystem mit einer kapazitiven Brückenschaltung aufweist.

6. Ventil nach einem der Ansprüche 1 bis 5,
dadurch gekennzeichnet, daß
die Signalerzeugungseinrichtung zusätzlich einen A/D-Wandler (28) aufweist, welcher die in analoger Form anfallenden Drucksignale des Absolutdruck-Sensors (23) in Digitalsignale umformt.

7. Ventil nach einem der Ansprüche 1 bis 6,
dadurch gekennzeichnet, daß
der elektronische Speicher (27) ein digitaler Speicher ist, der wenigstens ein 8-Bit-Wort oder ein 16-Bit-Wort dauerhaft zu speichern vermag.

8. Ventil nach Anspruch 7,
dadurch gekennzeichnet, daß
der elektronische Speicher ein RAM (random excess memory) mit einem kontinuierlichen Strombedarf kleiner 1 uA ist.

9. Ventil nach Anspruch 7,
dadurch gekennzeichnet, daß
der elektronische Speicher ein EEPROM (electrically erasable programmable read only memory) ist.

10. Ventil nach einem der Ansprüche 1 bis 9,
das in üblicher Weise eine Ventileinrichtung mit einem herkömmlichen Ventileinsatz (4) aufweist, zu dem ein verstellbares Ventilglied (7) gehört, das unter der Vorspannung einer Feder (8) in einen Ventilsitz (6) gedrückt wird, um die Ventileinrichtung und damit den Fahrzeugreifen druckdicht zu verschließen, und das mit Hilfe eines Ventilsößels (9) gegen die Vorspannung der Feder (8) vom Ventilsitz (6) gelöst werden kann, um einen Füllvorgang oder eine sonstige Änderung des Reifendruckes durchzuführen,
dadurch gekennzeichnet, daß
die Aktivierungseinrichtung einen Permanentmagneten (18) aufweist, der mechanisch mit dem Ventilstößel (9) gekoppelt ist und dessen Verstellbewegung mitmacht;
diesem Permanentmagneten (18) ein Magnetfeldsensor (25) an der Signalerzeugungseinrichtung zugeordnet ist, der eine Annäherung des Permanentmagneten erfaßt; und
der Mikroprozessor (26) die Bildung und Speicherung des ausgewählten elektrischen Drucksignales veranlaßt, nachdem der Magnetfeldsensor (25) ein Öffnen und erneutes Schließen der Ventileinrichtung erfaßt hat.

11. Ventil nach Anspruch 10,
dadurch gekennzeichnet, daß
der Magnetfeldsensor (25) ein magnetisch steuerbarer Transistor ist.

12. Ventil nach einem der Ansprüche 1 bis 11,
dadurch gekennzeichnet, daß
im elektronischen Speicher (27) und/oder im Mikroprozessor (26) ein vorgegebener Druckwert (a priori vorgegebener Druckwert) enthalten ist, welcher dem typischen Reifendruck des vorgesehenen Fahrzeugreifens entspricht;
das nach Betätigung der Aktivierungseinrichtung erzeugte, ausgewählte Drucksignal mit diesem a priori vorgegebenen Druckwert verglichen wird; und
bei erheblicher Abweichung ein Alarmsignal ausgelöst wird.

13. Ventil nach einem der Ansprüche 1 bis 12,
dadurch gekennzeichnet, daß
die Signalerzeugungseinrichtung zusätzlich einen Temperatursensor aufweist, welcher die Reifen- und/oder Druckluft-Temperatur erfaßt.

14. Ventil nach einem der Ansprüche 1 bis 13,
dadurch gekennzeichnet, daß
die Signalerzeugungseinrichtung zusätzlich einen Taktgenerator aufweist, der einen Systemtakt zur periodischen Aktivierung des Mikroprozessors (26) erzeugt.

15. Ventil nach einem der Ansprüche 1 bis 14,
dadurch gekennzeichnet, daß
die Signalerzeugungseinrichtung zusätzlich eine Spannungsüberwachung der Stromquelle (29) aufweist.

## Claims

1. A valve
having means for generating a wireless transmittable indicating signal (signal generating means) in case of a pressure drop within vehicle tires,
wherein the valve (1) comprises a valve spud (15) and a valve stem (2) extending from said valve spud (15) such providing a valve spud side remote to said valve stem (2);
wherein said signal generating means being mounted on said valve spud side remote to said valve stem (2) and comprising at least:
- an absolute-pressure sensor (23) being admittable with the pressure within the tire and generating an electric pressure signal in accordance with the pressure within the tire;
- an electronic storage means (27);
- a transmitter means (30, 31) for telemetric transmission of an indicating signal in case of a pressure drop;
- a microprocessor (26) including an arithmetic-logic unit; and
- a power supply means (29);
characterized in that
providing additionally an activating means (14, 25);
wherein an activation of said activating means (14, 25) causes the absolute-pressure sensor (23) to generate an electric pressure signal corresponding to the actually prevailing tire pressure (desired tire pressure);
said electric pressure signal which has been generated immediately following an activation of said activating means (18, 25), or a signal derived therefrom will be impressed into the electronic storage means (27), will be continously stored therein and will be held available for reference purposes as selected pressure signal;
and wherein the arithmetic-logic unit
- compares an electric pressure signal newly generated by said absolute-pressure means (23) with said selected and stored pressure signal and generates a compare signal;
- refers said compare signal to a given threshold value; and
- activates said transmitter means (30, 31) at least then, whenever a given ratio between the threshold value and the compare signal is upper or under deviated.

2. The valve according to claim 1,
wherein
said signal generating means comprises additionally an acceleration sensor (24).

3. The valve according to claim 1 or 2,
wherein
said absolute-pressure sensor (23) being maintained regularly in a deactivated status and will sense a tire pressure and will generate an electric pressure signal only in case of a preceding activation, and will thereafter again assume said deactivated status.

4. The valve according to claim 3,
wherein
a periodical activation of the absolute-pressure sensor (23) to generate new electric pressure signals will be effected only in case when the acceleration sensor (24) has sensed a rotation of said wheel equipped with the valve (1).

5. The valve according to anyone of the claims 1 to 4,
wherein
said absolute-pressure sensor (23) being formed like a semiconductor device and comprising a piezoresistive transducer or a transducer system having a capacitive bridge circuit.

6. The valve according to anyone of the claims 1 to 5,
wherein
said signal generating means comprises additionally an analog to digital converter (28), which transforms the analog pressure signals as provided by the absolute-pressure sensor (23) into digital signals.

7. The valve according to anyone of the claims 1 to 6,
wherein
said electronic storage means (27) comprises a digital storage means enabled to store at least one 8-bit word or at least one 16-bit word for a continuous period.

8. The valve according to claim 7,
wherein
said electronic storage means comprises a RAM (random excess memory) requiring a continuous power demand less than 1 micro Ampere.

9. The valve according to claim 7,
wherein
said electronic storage means comprises an EEPROM (electrically erasable programmable read only memory).

10. The valve according to anyone of the claims 1 to 9,
comprising a conventional valve means (4) including a movable valve body (7) biased by a spring (8) into a valve seat (6) in order to close the valve and a tire pressure-tightly, and further including a valve push rod (9) enabled to shift-off the valve body (7) against the spring (8) biasing from the valve seat (6) in order to perform an inflation step or another change of the tire pressure,
wherein
said activating means comprises a permanent magnet (18) mechanically coupled with the valve push rod (9) and following the movement thereof;
said signal generating means comprises a magnetic field sensor (25) sensing an approach of said permanent magnet (18); and
said microprocessor (26) causes a generation and a storing of said selected electric pressure signal whenever the magnetic field sensor (25) has sensed an opening and renewed closing of the valve means (4).

11. The valve according to claim 10,
wherein
said magnetic field sensor (25) comprises a magnetically controlled transistor.

12. The valve according to anyone of the claims 1 to 11,
wherein
said electronic storage means (27) and/or said microprocessor (26) contains a given pressure value (a priori given pressure value) corresponding to a typical (desired) pressure of a given vehicle tire;
said selected pressure signal generated whenever the activating means has been activated being compared with said a priori given pressure value; and
an alarm signal will be triggered whenever said selected pressure signal differs substantially from said a priori given pressure value.

13. The valve according to anyone of the claims 1 to 12,
wherein
said signal generating means comprises additionally a temperature sensor sensing the temperature of the tire material and/or of the pressurized air within the tire.

14. The valve according to anyone of the claims 1 to 13,
wherein
said signal generating means comprises additionally a clock generator providing a clock frequency for a periodical activation of the micro-processor (26).

15. The valve according to anyone of the claims 1 to 14,
wherein
said signal generating means comprises additionally a voltage control means for the power supply means (29).

## Revendications

1. Valve
comportant un dispositif de production d'un signal d'indication de diminution de pression (dispositif de production de signal), qui peut être transmis sans fil, pour un pneu de véhicule,
la valve (1) comportant une embase (15) de valve et une tige (2) de valve, qui fait saillie de l'embase (15) de valve, de sorte que l'embase (15) de valve ait un côté éloigné de la tige (2) de valve;
le dispositif de production de signal étant monté de ce côté de l'embase de valve éloigné de la tige (2) de valve et comportant au moins :
- un capteur (23) de pression absolue, qui peut être soumis à la pression du pneu et qui produit un signal électrique de pression correspondant à la pression du pneu;
- une mémoire électronique (27);
- un émetteur (30, 31) pour la transmission télémétrique d'un signal d'indication de diminution de pression;
- un microprocesseur (26) comportant une unité arithmétique; et
- une source (29) de courant;
caractérisée en ce que
il est prévu en supplément un dispositif (14,25) d'activation;
le capteur (23) de pression absolue est activé par un actionnement de ce dispositif (14, 25) d'activation et un signal électrique de pression, qui correspond à la pression régnant justement dans le pneu (pression de consigne de pneu), est formé à l'aide de celui-ci;
ce signal électrique de pression formé après actionnement du dispositif (14, 25) d'activation ou un signal obtenu à partir de celui-ci est écrit dans la mémoire électronique (27), y est mémorisé en permanence et est tenu prêt à des fins de référence en tant que signal sélectionné de pression;
et l'unité arithmétique
- compare un signal électrique de pression nouvellement produit par le capteur (23) de pression absolue au signal de pression mémorisé et sélectionné et produit un signal de comparaison;
- établit une référence du signal de comparaison à un seuil prescrit; et
- active l'émetteur (30,31), à chaque passage au-dessus ou au-dessous d'un écart prescrit entre le seuil et le signal de comparaison.

2. Valve suivant la revendication 1,
caractérisée en ce que
le dispositif de production de signal comporte en supplément un capteur (24) d'accélération.

3. Valve suivant la revendication 1 ou 2,
caractérisée en ce que
le capteur (23) de pression absolue est désactivé en règle générale et ne mesure la pression du pneu qu'après une activation, produit un signal de pression correspondant puis repasse à l'état désactivé.

4. Valve suivant la revendication 3,
caractérisée en ce que
une activation périodique du capteur (23) de pression absolue pour la formation de nouveaux signaux électriques de pression ne s'effectue que lorsque le capteur (24) d'accélération a détecté une rotation de la roue, sur laquelle se trouve la valve (1).

5. Valve suivant l'une des revendications 1 à 4,
caractérisée en ce que
le capteur (23) de pression absolue est sous forme de composant à semi-conducteur et comporte un transducteur piéso-résistif ou un système de transducteur ayant un circuit en pont capacitif.

6. Valve suivant l'une des revendications 1 à 5,
caractérisée en ce que
le dispositif de production de signal comporte en supplément un convertisseur analogique/numérique (28), qui convertit les signaux de pression sous forme analogique du capteur (23) de pression absolue en signaux numériques.

7. Valve suivant l'une des revendications 1 à 6,
caractérisée en ce que
la mémoire électronique (27) est une mémoire numérique, qui est capable de mémoriser de manière permanente au moins un mot de 8 bit ou un mot de 16 bit.

8. Valve suivant la revendication 7,
caractérisée en ce que
la mémoire électronique est une mémoire vive RAM (random access memory) ayant une consommation en courant continu plus petite que 1 µA.

9. Valve suivant la revendication 7,
caractérisée en ce que
la mémoire électronique est une EEPROM (electrically erasable programmable read only memory).

10. Valve suivant l'une des revendications 1 à 9,
qui comporte de manière usuelle un dispositif de valve comportant un obus (4) courant de valve, dont fait partie un élément (7) de valve déplaçable, qui est pressé sous la précontrainte d'un ressort (8) dans un siège (6) de valve, pour fermer de manière étanche à la pression le dispositif de valve est ainsi le pneu du véhicule, et qui peut être séparé du siège (6) de valve à l'aide d'un poussoir (9) de valve à l'encontre de la précontrainte du ressort (8), pour effectuer une opération de remplissage ou une autre modification de la pression du pneu,
caractérisée en ce que
le dispositif d'activation comporte un aimant permanent (18), qui est couplé mécaniquement au poussoir (9) de valve et qui accompagne son mouvement de réglage;
il est associé à cet aimant permanent (18) un capteur (25) de champ magnétique sur le dispositif de production de signal, lequel capteur détecte un rapprochement de l'aimant permanent; et
le microprocesseur (26) provoque la formation et la mémorisation du signal électrique sélectionné de pression, après que le capteur (25) de champ magnétique a détecté une ouverture et une nouvelle fermeture du dispositif de valve.

11. Valve suivant la revendication 10,
caractérisée en ce que
le capteur (25) de champ magnétique est un transistor pouvant être commandé magnétiquement.

12. Valve suivant l'une des revendications 1 à 11,
caractérisée en ce que
la mémoire électronique (27) et/ou le microprocesseur (26) contient une valeur prescrite de pression (valeur de pression prescrite a priori), qui correspond à la pression typique du pneu du véhicule prévu;
le signal de pression sélectionné et produit après actionnement du dispositif d'activation est comparé à cette valeur de pression prescrite a priori; et
un signal d'alarme est déclenché en cas d'écart grand.

13. Valve suivant l'une des revendications 1 à 12,
caractérisée en ce que
le dispositif de production de signal comporte en supplément un capteur de température, qui mesure la température du pneu et/ou de l'air sous pression.

14. Valve suivant l'une des revendications 1 à 13
caractérisée en ce que
le dispositif de production de signal comporte en supplément une horloge, qui produit un rythme de système pour l'activation périodique du microprocesseur (26).

15. Valve suivant l'une des revendications 1 à 14
caractérisée en ce que
le dispositif de production de signal comporte en supplément un dispositif de contrôle de la tension de la source (29) de courant.
